Europäisches Patentamt

European Patent Office

Office européen des brevets

(19)

(11) Numéro de publication : **0 176 400 B1**

(12) **FASCICULE DE BREVET EUROPÉEN**

(45) Date de publication du fascicule du brevet :
17.05.89

(51) Int. Cl.⁴ : **G 01 V 1/40, E 21 B 47/00**

(21) Numéro de dépôt : 85401675.5

(22) Date de dépôt : 23.08.85

(54) Procédé pour évaluer la qualité du ciment entourant le tubage d'un puits.

(30) Priorité : 24.08.84 FR 8413220

(43) Date de publication de la demande :
02.04.86 Bulletin 86/14

(45) Mention de la délivrance du brevet :
17.05.89 Bulletin 89/20

(84) Etats contractants désignés :
AT DE FR GB IT NL

(56) Documents cités :
FR-A- 1 316 116
GB-A- 2 034 888
US-A- 3 265 151
US-A- 3 291 247

(73) Titulaire : **SOCIETE DE PROSPECTION ELECTRIQUE SCHLUMBERGER**
**42, rue Saint-Dominique**
**F-75340 Paris Cédex 07 (FR)**
**FR IT**
**Schlumberger Limited**
**277 Park Avenue**
**New York, N.Y. 10172 (US)**
**DE GB NL AT**

(72) Inventeur : **Catala, Gérard**
**2, avenue du 11 novembre**
**F-92190 Meudon (FR)**
Inventeur : **Stowe, Ian**
**16, rue Gabriel Péri**
**F-92120 Montrouge (FR)**
Inventeur : **Henry, Daniel**
**27, allée du Néflier**
**Chevry 2 F-91190 Gif-sur-Yvette (FR)**

(74) Mandataire : **Hagel, Francis**
**Etudes et Productions Schlumberger A L'ATTENTION DU SERVICE BREVETS 26, rue de la Cavée B.P. 202 F-92142 Clamart Cédex (FR)**

EP 0 176 400 B1

**Description**

L'invention intéresse les puits forés pour explorer ou exploiter les richesses du sous-sol. Elle concerne l'évaluation de la qualité du ciment entourant le tubage que l'on insère dans un tel puits.

Il est connu de faire cette évaluation à l'aide d'ultrasons.

Le plus ancien outil de ce type, dit CBL (pour Cement Bond Log), utilise un émetteur d'ultrasons et un récepteur d'ultrasons, espacés l'un de l'autre le long du tubage. Son principe général est le suivant : si le récepteur reçoit rapidement un écho fort, c'est que le tubage vibre, et qu'il n'est pas bien tenu par le ciment. Si au contraire les échos importants tardent à venir au récepteur, ou même s'il ne s'en produit aucun, on peut supposer que le tubage est bien tenu par le ciment qui l'entoure. Cet outil travaille à chaque mesure sur une longueur de tube sensiblement égale à la distance entre son émetteur et son récepteur d'ultrasons.

Plus récemment est apparu un autre outil, dit CET (pour Cement Evaluation Tool). Il explore au contraire le tubage par secteurs radiaux, et comporte à cet effet une série de transducteurs émetteurs-récepteurs d'ultrasons (huit par exemple) espacés à la fois angulairement et axialement (par exemple en hélice) le long du tubage. Il s'y ajoute en principe un transducteur de référence, muni d'un réflecteur à distance fixe, et qui donne la vitesse des ultrasons « in situ ». On peut ainsi réaliser huit mesures acoustiques de diamètre et déterminer ensuite l'ovalisation du tubage ainsi que le décentrage de la sonde qui porte l'outil, relativement à l'axe du tubage. De plus, et surtout, cet outil permet dans une certaine mesure d'évaluer la qualité du ciment selon plusieurs directions angulaires dans chaque section droite du tubage, étant observé que les phénomènes de propagation ultrasonore qui entrent en jeu sont complexes.

Ainsi, l'outil CET permet assez bien de déterminer si le tubage est libre de vibrer selon un mode de résonance en épaisseur, donc mal cimenté, ou au contraire bien tenu par le ciment, et ce pour les différentes directions angulaires explorées par les transducteurs.

Par contre, les situations intermédiaires sont plus délicates à traiter.

Jusqu'à présent, il a été considéré que l'on pouvait, dans ces situations intermédiaires, déduire des mesures une résistance à la compression du ciment, qui en caractériserait la tenue mécanique pour chaque direction angulaire explorée.

Toutefois, il a été observé que la résistance à la compression ne représente qu'imparfaitement la qualité de l'étanchéité hydraulique que l'on cherche à établir autour du tubage entre les différentes couches du sous-sol percées par le forage.

En particulier, il arrive qu'un ciment dont la résistance à la compression paraît suffisante, se trouve en fait perméable au gaz, notamment par des pores communicants.

Ainsi un premier but de la présente invention est, partant des mesures d'un outil CET, de traiter celles-ci afin d'en permettre une interprétation plus précise quant à la qualité du ciment mis en place.

Un autre but de l'invention est de permettre de distinguer si, dans chaque secteur angulaire exploré, le matériau situé immédiatement à l'extérieur du tubage est solide ou liquide, ou bien s'il contient du gaz.

Un autre but de l'invention est de déterminer si, lorsqu'il est solide, le matériau entourant le tubage contient des pores qui communiquent ou non.

Un autre but encore de l'invention est de permettre une exploitation conjointe des informations fournies par un outil CBL et de celles fournies par un outil CET.

A cet effet, l'invention propose tout d'abord un procédé pour évaluer la qualité du ciment entourant le tubage d'un puits. Ce procédé est du type dans lequel :

— on déplace, de façon repérée dans le tubage, une sonde porteuse d'un outil muni de transducteurs émetteurs-récepteurs d'ultrasons visant des zones de directions angulaires différentes, et propres à induire une résonance d'épaisseur dans le tubage,

— on excite sélectivement les transducteurs et on enregistre sélectivement le signal reçu par chacun d'entre eux en réponse à son impulsion d'émission, ce signal contenant des informations sur la matière située à l'extérieur du tubage, dans la zone explorée par le transducteur, compte tenu de la position axiale et angulaire de la sonde dans le tubage.

Selon un aspect général de l'invention, le traitement des signaux enregistrés comprend, en combinaison, les opérations suivantes :

a) définir pour chaque signal reçu une première fenêtre (W1) calée sur le premier écho, dû à la réflexion sur la paroi interne du tubage, une seconde fenêtre (W2) calée sur la partie intermédiaire décroissante des échos suivants, dus à l'environnement externe du tubage, et une troisième fenêtre (W3) calée sur la partie initiale de ces mêmes échos suivants ;

b) déterminer pour chaque signal reçu deux grandeurs brutes (AW2i, AW3i) dont l'une (AW2i) représente le rapport entre les énergies des signaux reçus pendant les seconde et première fenêtres, et l'autre (AW3i) représente le rapport entre les énergies des signaux reçus pendant les troisième et première fenêtres ;

EP 0 176 400 B1

c) déterminer pour chaque signal reçu deux grandeurs normalisées (W2Ni, W3Ni) tirées respectivement des grandeurs brutes (AW2i, AW3i) par des combinaisons linéaires de la forme

$$W2Ni = a \, (AW2i - b)$$
$$W3Ni = a' \, (AW3i - b')$$

où a, a', b et b' sont des coefficients choisis en tenant compte de la réponse brute d'un tubage libre, en présence d'un environnement prédéterminé, tel que de l'eau à l'extérieur du tubage et de la boue à l'intérieur,

d) décider de la qualité de cimentation du tubage en fonction du fait que les couples de grandeurs normalisées (W2Ni, W3Ni) suivent une loi prédéterminée, et de la relation entre chaque grandeur normalisée (W2Ni, W3Ni) et un couple de valeurs de seuil qui lui est respectivement associé (W2NC, W3NC ; W2NG, W3NG).

De préférence, à l'opération d) on évalue la cimentation sur la base de la seconde grandeur normalisée (W3Ni) si la valeur de la première (W2Ni) est supérieure à ce que donne ladite loi prédéterminée.

L'évaluation s'effectue comme suit :

— on décide que le tubage est entouré de solide et correctement cimenté dans la zone explorée par chaque transducteur si l'une au moins des grandeurs normalisées correspondantes (W2Ni, W3Ni) est en deçà du seuil inférieur qui lui est propre (W2NC, W3NC) ;

— on décide que le tubage est entouré de gaz dans la zone explorée par chaque transducteur si les deux grandeurs normalisées correspondantes (W2Ni, W3Ni) excèdent leurs seuils supérieurs respectifs (W2NG, W3NG) ;

— on reconnaît une cimentation incorrecte ou une présence de liquide dans le domaine intermédiaire où les deux grandeurs normalisées (W2Ni, W3Ni) dépassent leurs seuils inférieurs respectifs (W2NC, W3NC) et où l'une au moins d'entre elles se trouve en deçà de son seuil supérieur (W2NG, W3NG).

Les seuils (W2NC, W3NC ; W2NG, W3NG) sont déterminés à partir d'une impédance de seuil caractéristique du ciment ou du gaz et des caractéristiques diamètre/épaisseur du tubage.

Pour distinguer entre une cimentation incorrecte ou la présence de liquide et du ciment poreux, l'invention prévoit que l'on effectue une analyse statistique des résultats pour les zones explorées selon les différentes directions angulaires et sur une longueur déterminée de tubage afin de déterminer si l'on est en présence de gaz, d'après le nombre de zones situées franchement dans le domaine gazeux ; s'il apparaît ainsi que l'environnement est gazeux, on modifie les résultats relatifs aux zones présumées liquides pour les considérer comme du ciment poreux logeant du gaz.

Selon un autre aspect encore de l'invention, on descend en outre dans le tubage un outil du type CBL, avec émetteur et récepteur ultrasonores espacés axialement. Le traitement se complète comme suit :

e) l'on compare les résultats obtenus avec les deux outils pour déterminer que :

e1) l'on est en présence de ciment poreux si l'outil CBL révèle un tube tenu tandis que l'outil CET donne des résultats du domaine intermédiaire, et

e2) l'on est en présence de liquide si les deux outils donnent des résultats concordants dans le domaine intermédiaire.

Il est alors possible d'analyser les résultats angulaires de l'outil CET en vue de déterminer si les porosités du ciment sont ou non communicantes.

Le procédé peut être en œuvre pour partie sur le terrain, et pour partie en laboratoire.

De même, au moins une partie des opérations a) à c) peuvent être effectuées « in situ ». D'un autre côté, on peut reprendre ces opérations avec des paramètres réajustés si lesdites grandeurs normalisées ne suivent pas ladite loi prédéterminée.

Plus particulièrement, les grandeurs normalisées prenant la valeur 1 pour le tubage libre entouré d'eau, ladite loi prédéterminée est sensiblement de la forme :

$$W2Ni = (W3Ni)^{2,75}$$

De leur côté, les seuils inférieurs associés aux deux grandeurs normalisées sont déterminés pour distinguer un ciment minimum acceptable d'une boue lourde de densité environ $1,6 \, g \, cm^{-3}$. Et les seuils supérieurs associés aux deux grandeurs normalisées sont déterminés pour distinguer un gaz sous pression, d'impédance acoustique voisine de $0,1 \, kg/mm^2/sec$.

En pratique, le procédé se complète de l'opération supplémentaire suivante :

établir une représentation figurative illustrant le long du tubage, angulairement le cas échéant, la présence de ciment correct, de ciment gazeux, de liquide ou de gaz.

D'autres caractéristiques et avantages de l'invention apparaîtront à l'examen de la description détaillée ci-après, et des dessins annexés, sur lesquels :

la figure 1 illustre schématiquement un outil CET ;

3

la figure 2 illustre un exemple d'onde recueillie par l'un des transducteurs d'un tel outil ;

les figures 3A à 3C illustrent trois formes d'ondes typiques correspondant à trois situations particulières ;

la figure 4 est un diagramme illustrant la dépendance d'une mesure normalisée d'un outil CET en fonction de divers paramètres ;

la figure 5 illustre la courbe d'une loi prédéterminée reliant deux mesures normalisées CET qui se correspondent ;

les figures 5A et 5B illustrent des mesures CET brutes et normalisées, respectivement ;

la figure 6 illustre différentes étapes du procédé selon l'invention ;

la figure 7 illustre un outil CBL,

la figure 8 illustre un exemple de représentation figurative que l'invention permet d'obtenir.

Les dessins annexés apportent des informations qu'ils peuvent seuls définir. En conséquence, ils sont incorporés à la présente description, non seulement pour servir avec elle à faire comprendre l'invention, mais aussi pour contribuer à définir celle-ci, le cas échéant.

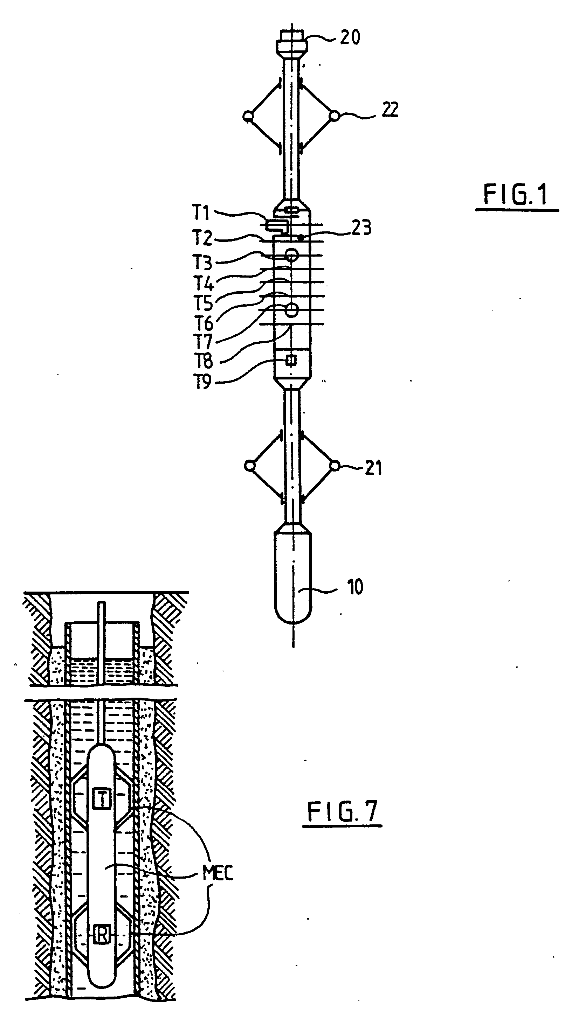

La figure 1 illustre une sonde équipée d'un outil du type CET. En partie basse apparaît une tête de sonde 10 ; en partie haute une connexion 20. Deux centreurs 21 et 22, par exemple du type décrit dans la Demande de Brevet français n° 83 07 831, au nom de la Demanderesse, sont prévus entre les deux parties d'extrémité 10 et 20 ; ils encadrent l'outil CET proprement dit.

Celui-ci comprend :

— une série de huit transducteurs T1 à T8, illustrés schématiquement pour certains. Ils ont environ 2,5 cm de diamètre et sont distribués hélicoïdalement à 45 degrés l'un de l'autre. Chacun de ces transducteurs peut être déplacé radialement sous l'effet d'une vis de réglage 23.

— Un neuvième transducteur T9, orienté axialement et équipé d'un réflecteur métallique à distance fixe connue (non visible). Ce transducteur étalon permet la mesure in situ du temps d'aller-retour dans le fluide que contient le tubage. Ainsi, on peut déterminer de façon précise la vitesse de propagation du son dans ce fluide.

La surface de tubage couverte par chacun des transducteurs T1 à T8 est pratiquement égale à celle de la face avant du transducteur, la dispersion étant faible dans la bande de fréquence utilisée ; typiquement, des ondes longitudinales de 300 à 600 kHz.

Les impulsions ultrasonores sont déclenchées séquentiellement pour les différents transducteurs. Les signaux reçus correspondants pour chaque transducteur sont analysés, de la même manière séquentielle. Ceci s'effectue par une cartouche électronique (non représentée) montée en amont de la connexion 20 de la sonde. Cette cartouche électronique amplifie les signaux recueillis avant de les transmettre en surface.

Les signaux reçus à la surface sont remis en profondeur, puisque la position de la sonde y est connue. La direction radiale associée à chaque signal reçu est définie d'après le transducteur concerné et la position angulaire de la sonde dans le tubage, que l'on sait détecter.

D'autres explications sur le fonctionnement d'un outil CET pourront être trouvées dans la brochure commerciale SCHLUMBERGER intitulée « Cement Evaluation Tool » et parue en Juin 1983, ou encore dans les publications de Brevet français n° 2 400 613 et 2 491 123.

Ces documents montrent également les représentations figuratives actuellement utilisées pour présenter les résultats. Dans son ensemble, et en particulier pour ces représentations, leur contenu est à ajouter à la présente invention pour permettre de la mieux définir.

Comme déjà indiqué, l'outil CET permet de déterminer si le tubage est très bien tenu par un ciment solide, continu, de très bonne qualité. Il permet aussi de voir si le tubage est libre, c'est-à-dire entouré de liquide (eau, boues) ou de gaz, donc pas cimenté du tout.

Reste un domaine intermédiaire où l'analyse est plus délicate. Les techniques connues jusqu'à présent ont d'ailleurs peine à définir précisément les frontières de ce domaine intermédiaire.

Par ailleurs, la cimentation d'un tubage est une technique complexe, qui fait intervenir de nombreux paramètres. Quel que soit le soin qu'on y apporte, de nombreux facteurs peuvent rendre cette cimentation imparfaite.

Dans ces conditions, on a jusqu'à présent interprété les résultats donnés par l'outil CET, lorsqu'ils sont dans le domaine intermédiaire, en termes de résistance des matériaux : à partir des mesures de l'outil CET, on détermine, pour chaque profondeur et chaque direction angulaire explorée, une valeur correspondante de la résistance à la compression du ciment.

La présente invention vient proposer une approche différente.

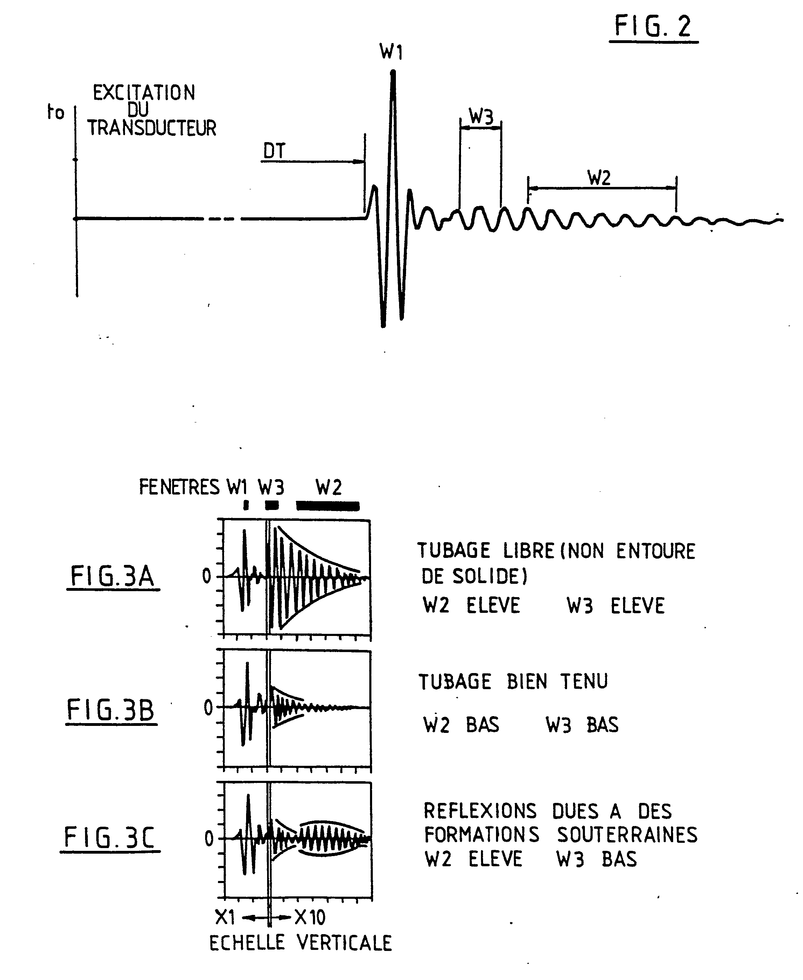

La figure 2 fait apparaître l'allure du signal reçu par un transducteur, à partir de son instant d'excitation to.

Les ondes ultrasonores longitudinales se propagent dans le fluide intérieur au tubage.

Le premier écho, dû au tubage, commence en DT, et sur son maximum est calée la première fenêtre W1.

Les échos suivants sont dus à la matière située à l'extérieur du tubage. Ils présentent une allure décroissante. Dans la partie intermédiaire de celle-ci est définie une seconde fenêtre assez large W2 (typiquement 20 microsecondes). Un peu plus tôt est définie une troisième fenêtre, plus brève, W3 (typiquement 5 microsecondes).

Les figures 3A à 3C reprennent le signal reçu dans trois situations différentes, et avec une échelle verticale agrandie dix fois après le premier écho.

Un tubage libre, non tenu par un solide, donne des valeurs élevées de W2 et W3 (Fig. 3A). Un tubage bien tenu par son ciment (Fig. 3B) donne des valeurs basses de W2 et W3. Lorsque des formations souterraines situées un peu plus loin produisent des réflexions, on obtient un niveau élevé en W2 et un niveau relativement bas en W3 (Fig. 3C).

On ajoute maintenant aux signaux l'indice i, pour les associer chacun à un transducteur et à une position de sonde donnés, en d'autres termes à une profondeur et une direction angulaire données dans le tubage.

Le traitement des signaux comprend donc :

a) tout d'abord la définition des trois fenêtres W1, W2 et W3, que l'homme de l'art comprendra ;

b) la détermination pour chaque signal reçu, à partir de ses portions W1i, W2i, W3i situées respectivement dans les trois fenêtres, de deux grandeurs brutes AW2i, AW3i définies comme suit :

$$AW2i = \frac{\text{énergie contenue dans W2i}}{\text{énergie contenue dans W1i}} = \frac{W2Ti}{W1Ti}$$

$$AW3i = \frac{\text{énergie contenue dans W3i}}{\text{énergie contenue dans W1i}} = \frac{W3Ti}{W1Ti}$$

La fenêtre W1 étant très étroite, il est envisageable de prendre simplement une valeur instantanée de W1i, sans en faire l'intégration.

Comme la mesure à la résonance W2 est divisée par la mesure de crête W1, on élimine l'effet de la sensibilité du transducteur.

c) la détermination, toujours pour chaque signal reçu, de deux grandeurs normalisées W2Ni et W3Ni.

Des normalisations ont déjà été proposées dans les outils CET, pour tenir compte de la réponse individuelle des transducteurs, ainsi que d'autres paramètres.

La présente invention fait usage préférentiellement d'une normalisation de la forme suivante :

$$W2Ni = a\ (AW2i - b)$$
$$W3Ni = a'\ (AW3i - b')$$

où $a$, $a'$, $b$, $b'$ sont des coefficients qui, en règle générale peuvent être déterminés d'une façon que l'on décrira plus loin en détail, sur un exemple. L'une des conditions à satisfaire est que, pour un milieu de référence, qui est en principe l'eau, la normalisation fournisse W2Ni = W3Ni.

Une normalisation simplifiée, et souvent suffisante consiste à considérer les coefficients $b$ et $b'$ comme nuls. On peut alors déterminer les coefficients $a$ et $a'$ en laboratoire, comme décrit ci-après.

Pour la taille et le poids du tubage considéré, on peut tirer au laboratoire une valeur de calibrage W2Ci qui représente la réponse de chacun des transducteurs Ti de l'outil utilisé, en présence d'un tel tubage avec de l'eau à l'extérieur, et à l'intérieur le même milieu ou boue que l'on va rencontrer dans le tubage, le transducteur Ti étant placé dans une position similaire à celle qu'il prend dans le puits. On définit alors :

$$W2Ci = \frac{W2Ti}{W1Ti} \quad \text{pour les interfaces boue/tubage/eau .}$$

W2Ci est ainsi une constante de normalisation, définie par la réponse W2Ti/W1Ti de chaque transducteur (i = 1 à 8). (En réalité, on détermine un jeu de valeurs W2Ci pour toute une gamme des milieux que l'outil pourra rencontrer à l'intérieur du tubage).

La normalisation de la première grandeur (AW2i) peut alors s'écrire :

$$W2Ni = \frac{W2Ti}{W1Ti} \cdot \frac{1}{W2Ci} \quad \text{avec} \quad a = \frac{1}{W2Ci}$$

On fait de même pour les signaux W3.

On détermine ainsi :

$$W3Ci = \frac{W3Ti}{W1Ti} \quad \text{pour les interfaces boue/tubage/eau}$$

et l'on écrit :

$$W3Ni = \frac{W3Ti}{W1Ti} \cdot \frac{1}{W3Ci} \quad \text{avec} \quad a' = \frac{1}{W3Ci}$$

où les notations sont les mêmes que précédemment, rapportées à W3.

Les mesures W2Ni et W3Ni ainsi obtenues sont beaucoup plus précises, et fidèles. Elles peuvent alors être rapportées de manière fiable à la nature du matériau situé à l'extérieur du tubage, dans la zone explorée par le transducteur concerné.

De façon plus générale, la Demanderesse a observé que l'on peut conduire la normalisation de sorte que les grandeurs W2Ni et W3Ni qu'elle fournit obéissent à une loi prédéterminée :

$$W2Ni = f(W3Ni)$$

De préférence, on prend la loi simple suivante :

$$W2Ni = (W3Ni)^p$$

où p est un nombre proche de 2,75 (à ±0,005, d'après les investigations actuelles). Ceci suppose naturellement qu'il n'y a pas de réflexions par des formations souterraines qui définiraient un troisième interface.

Par ailleurs, les études menées par la Demanderesse ont montré que l'on peut écrire, de manière approchée :

$$\frac{W2(Zx)}{W2(Zw)} = \exp \frac{Zw - Zx}{A \times TH + B}$$

où WZ (Zx) désigne la réponse brute (grandeur brute) pour un milieu à déterminer, extérieur au tubage, et d'impédance acoustique notée Zx, W2 (Zw) est la réponse brute de l'eau, d'impédance acoustique Zw, à l'extérieur du tubage, TH est l'épaisseur du tube en millimètres, et, pour des impédances acoustiques exprimées en $kg/mm^2/s$,

A vaut environ 0,30 $kg/mm^3/s$ et,

b vaut environ 0,20 $kg/mm^2/s$.

On note que W2 (Zw) désigne ici la réponse brute W2Ti, mesurée en laboratoire, comme précédemment décrit, pour les interfaces boue/tubage/eau en présence desquels se trouve l'outil.

La Demanderesse a maintenant observé que l'on peut dès lors utiliser l'outil CET pour obtenir des informations bien plus précises sur la nature du matériau entourant le tubage. Le procédé proposé se complète alors de l'opération suivante :

d) décider que la qualité de cimentation du tubage en fonction du fait que les couples de grandeurs normalisées (W2Ni, W3Ni) suivant la loi prédéterminée, et de la relation entre chaque grandeur normalisée (W2Ni, W3Ni) et un couple de valeurs de seuils qui lui est respectivement associé (W2NC, W3NC ; W2NG, W3NG).

On vérifie d'abord que chaque couple de grandeurs W2Ni et W3Ni satisfont la loi prédéterminée. Si c'est le cas, on compare ces grandeurs, pour chaque transducteur, aux seuils précités, qui sont définis comme suit : W2NC et W3NC caractérisent une impédance acoustique de seuil choisie ZC, prise en principe égale à 2,6 $kg/mm^2/sec$.

Ceci permet de distinguer un ciment minimum acceptable d'impédance 2,8, d'une boue lourde de densité 1,6 $g/cm^3$ dont l'impédance acoustique est de 2,4. Toutefois, ce premier seuil ZC, (qui définit les seuils inférieurs W2NC et W3NC d'après les formules données plus haut) peut être ajusté en fonction de la nature du ciment utilisé et des boues que l'on sait devoir rencontrer : certains ciments ont en effet des impédances acoustiques qui peuvent amener à abaisser l'impédance de seuil jusqu'à 2,0, étant observé qu'on ne les utilise pas en présence de boues lourdes.

Les seuils supérieurs W2NG et W3NG sont fixés d'après l'impédance acoustique maximale des gaz sous pression rencontrés dans un puits, qui est de l'ordre de 0,1 $kg/mm^2/sec$. Le seuil d'impédance ZG est alors fixé à quelques dixièmes, typiquement 0,2, et on en déduit W2NG et W3NG par les formules données plus haut.

La qualité de cimentation peut alors faire l'objet d'une évaluation préliminaire comme suit :

— on décide que le tubage est entouré de solide et correctement cimenté dans la zone explorée pour chaque transducteur si l'une au moins des grandeurs normalisées correspondantes (W2Ni, W3Ni) est en deçà du seuil inférieur qui lui est propre (W2NC, W3NC).

— on décide que le tubage est entouré de gaz dans la zone explorée par chaque transducteur si les deux grandeurs normalisées correspondantes (W2Ni, W3Ni) excèdent leurs seuils supérieurs respectifs (W2NG, W3NG) ;

— on reconnaît une cimentation incorrecte ou une présence de liquide dans le domaine intermédiaire où les deux grandeurs normalisées (W2Ni, W3NC) dépassent leurs seuils inférieurs respectifs (W2NC, W3NC) et où l'une au moins d'entre elles se trouve en deçà de son seuil supérieur (W2NG, W3NG).

On remarque d'une part que les frontières du domaine intermédiaire sont maintenant bien définies, et que l'on peut distinguer à coup sûr l'environnement solide du tubage d'une part, et son environnement gazeux d'autre part.

Entre les deux, l'environnement peut être soit constitué d'un ciment imparfait, soit liquide. L'invention a pour but second de chercher à résoudre cette ambiguïté, et ceci peut être fait en utilisant, séparément ou en combinaison, différents moyens.

Le premier moyen, qui utilise seulement les mesures de l'outil CET, a été dénommé « logique de gaz ».

Cette logique de gaz est normalement hors service. Les mesures du domaine intermédiaire sont alors considérées comme relatives à un liquide. Si l'analyse statistique des résultats montre que l'on a manifestement du gaz au contact du tubage en certains points de la zone examinée, la logique de gaz est mise en service, et les mesures du domaine intermédiaire sont alors considérées comme relatives à du ciment poreux, dont les pores sont emplis de gaz.

Les études et observations menées par la Demanderesse ont en effet montré la présence fréquente de tels ciments poreux.

L'analyse statistique précitée peut être conduite comme suit :

— examiner les mesures sur environ un mètre de tubage, et y déterminer la proportion de transducteurs qui trouvent du gaz, c'est-à-dire une valeur $W2N_i$ supérieure à $1 + DW$, (où $DW$ est un paramètre tenant compte de l'incertitude des mesures) par rapport à ceux dont la mesure est dans le domaine intermédiaire.

— si ce rapport dépasse un seuil RG, qui est ajustable aux environs de 30 %, on met en œuvre la logique de gaz.

L'ajustement des paramètres DW et RG permet de tenir compte du contexte, qui peut amener à annihiler la logique de gaz, si nécessaire sur le terrain.

Il est alors possible de faire une représentation figurative des résultats, plus précisément qu'auparavant, car on sait illustrer sur une développée plane du tubage :

— la distribution circonférentielle (sur le tubage) des points de cimentation acceptable, correspondant aux transducteurs qui ont une réponse supérieure à l'impédance de seuil ZC.

— la distribution circonférentielle du gaz libre à l'interface tubage/extérieur, par les points correspondant aux transducteurs qui ont une réponse inférieure à l'impédance de seuil ZG ;

— les autres points correspondant soit à du ciment inacceptable ou du liquide dans le cas normal, soit à du ciment à pores de gaz, si la logique de gaz a été déclenchée.

Les ombrages classiques (par exemple selon le brevet français publié sous le n° 2 491 123 sont naturellement utilisés pour faciliter la lecture des résultats, en indiquant de plus si la logique de gaz a ou non été déclenchée.

Le procédé selon l'invention sera maintenant décrit plus en détail, à l'aide d'exemples.

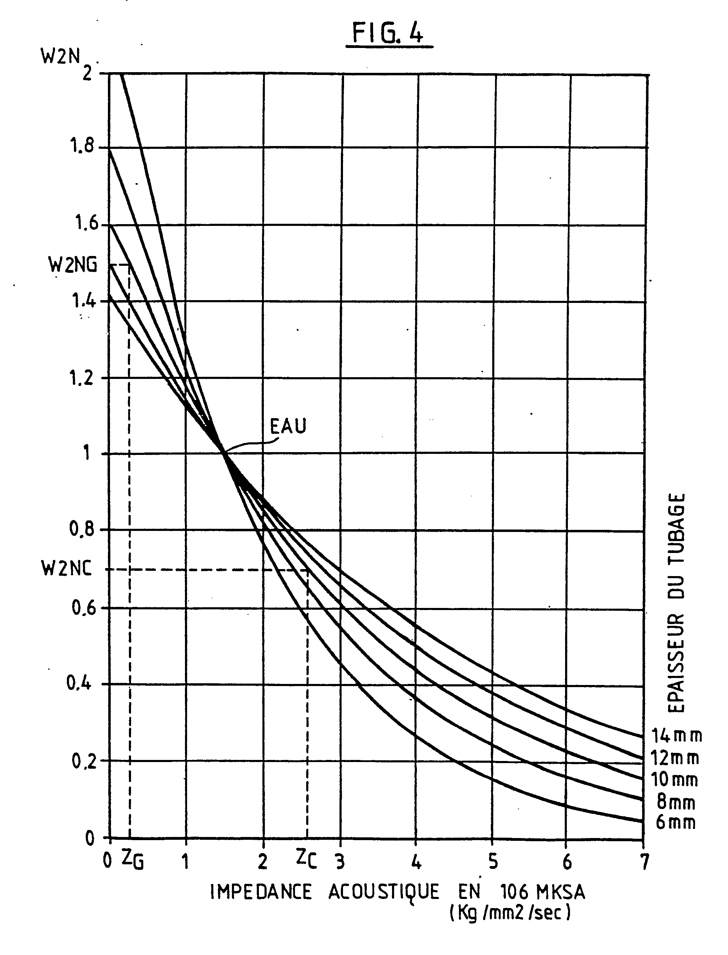

Tout d'abord, la figure 4 illustre, pour diverses épaisseurs de tubage, la relation entre la grandeur normalisée W2N et l'impédance acoustique du milieu extérieur au tubage. La Demanderesse a observé que la normalisation par rapport à l'eau ($W2N = 1$, impédance 1,5) est valable quelle que soit l'épaisseur du tubage.

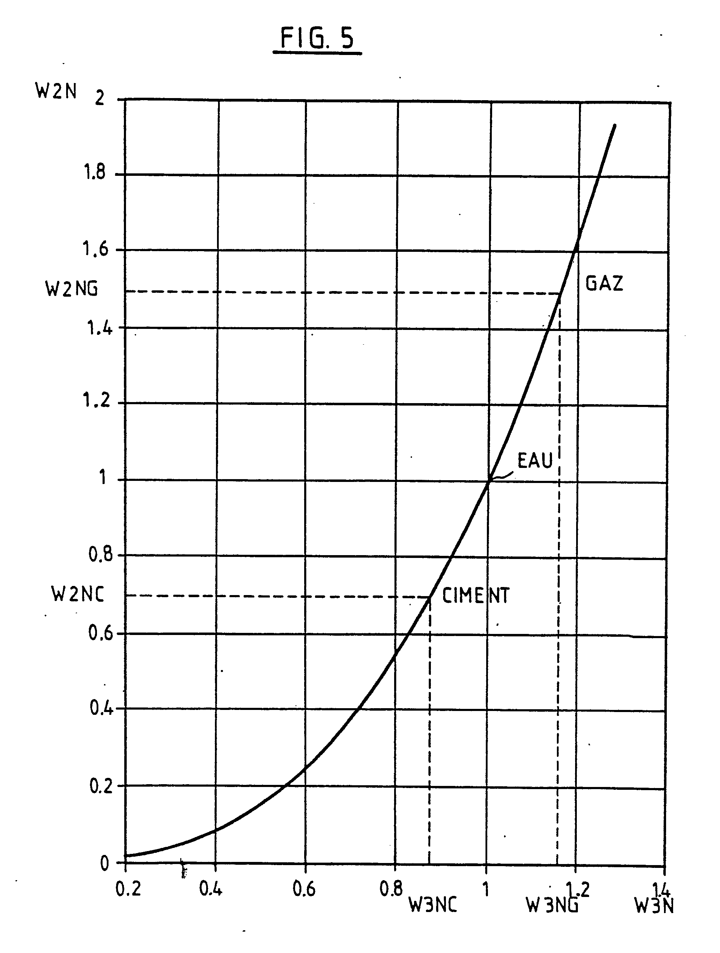

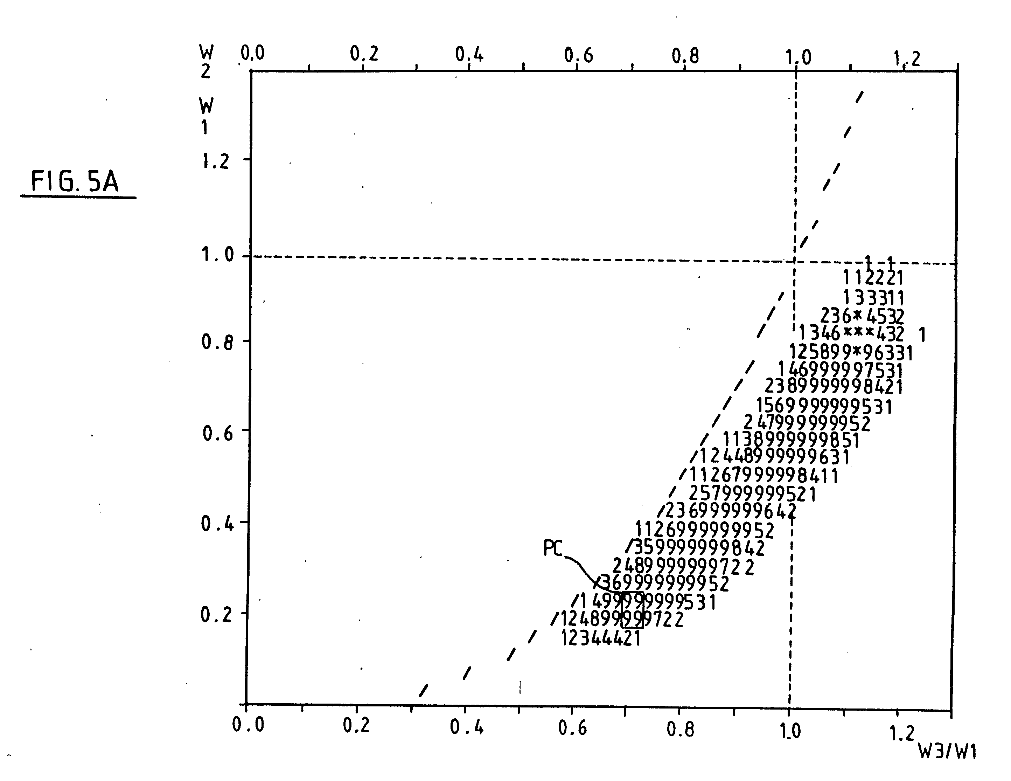

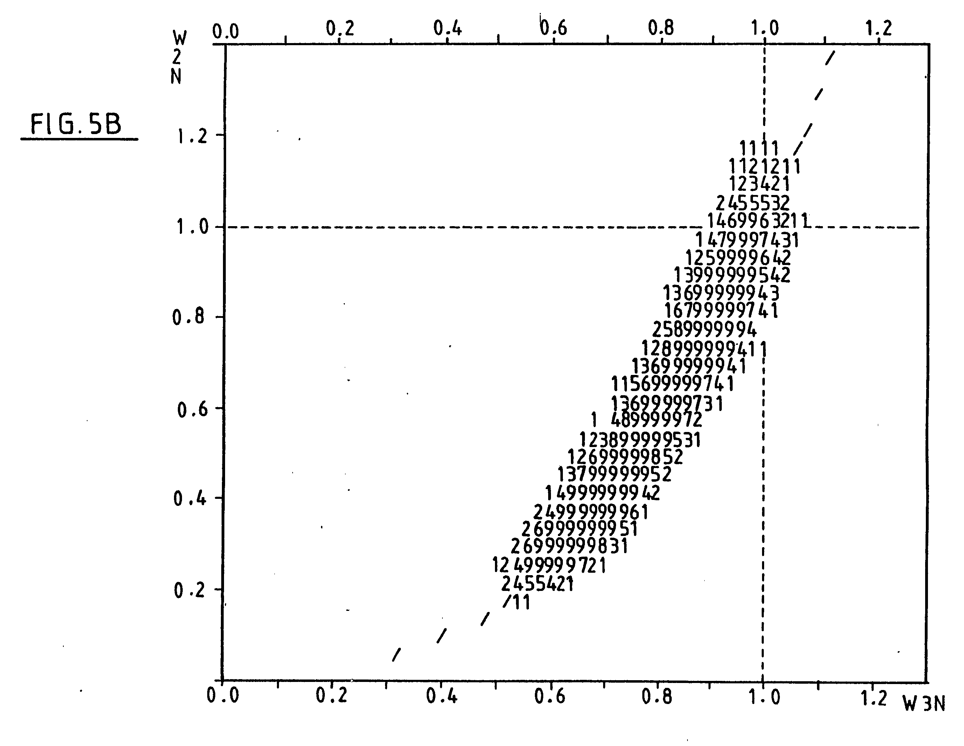

Il en est naturellement de même pour la grandeur normalisée W3N. Et la figure 5 illustre la loi $W2N = (W3N)^{2,75}$. Cette loi a pu être établie et vérifiée sur la base de données expérimentales, qui en ont illustré le bien fondé, dès lors qu'il n'y a pas de réflexions dues à des tiers interfaces.

L'épaisseur du tubage étant connue, par exemple 10 mm, et après avoir choisi les impédances de seuil Zc et Zg, par exemple à 2,6 et 0,2 respectivement, on en déduit W2NC et W2NG par la courbe à 10 mm de la figure 4, ce qui donne sensiblement :

$$W2NC = 0,7$$
$$W2NG = 1,5$$

Des courbes analogues pour W3N, ou bien la loi de la figure 5, permettent de déterminer aussi, sensiblement :

$$W3NC = 0,88$$
$$W3NG = 1,16$$

A partir des figures 5A et 5B, on décrira maintenant la normalisation selon l'invention, d'une manière plus générale que la normalisation simplifiée exposée plus haut. Ces figures concernent un ensemble de mesures faites par tous les transducteurs, sur une profondeur d'environ 500 mètres.

La figure 5A fait apparaître un « nuage » qui illustre la distribution des points de mesure, en fréquences statistiques, ramenées à l'intervalle 0,10. La loi prédéterminée est représentée par des barres obliques. Les astérisques définissent le point relatif au tubage libre dans l'eau, que l'homme de l'art sait en principe identifier, par exemple à partir du barycentre des points hauts du nuage, étant observé que la présence de gaz donne un autre nuage adjacent, avec des valeurs nettement plus élevées de W2N et W3N.

En pratique, le point représentatif de l'eau est celui à partir duquel les fréquences diminuent.

En partie basse du nuage, on recherche de même le point PC représentatif de la partie la mieux cimentée. Connaissant la nature du ciment utilisé, on peut estimer avec une bonne précision son impédance acoustique lorsqu'il a bien pris, en profondeur. Il s'en déduit des valeurs correspondantes de W2N et W3N. On connaît également celles de l'eau.

On dispose ainsi de quatre informations numériques pour déterminer les quatre paramètres a, a', b, b'.

Schématiquement, b et b' peuvent être calculés à partir du point de meilleur ciment. Après avoir fait la différence entre les grandeurs W2N et W3N pour l'eau et le ciment, on détermine a et a'.

Bien entendu, les ajustements nécessaires pour déterminer les grandeurs a, a', b et b' peuvent être faits sous le contrôle de l'homme de l'art, qui dispose alors de paramètres adéquats à cet effet.

La figure 5B montre que les données normalisées viennent se centrer sur la courbe théorique. Après normalisation, les coordonnées du point de tubage libre sont bien $W2N = 1 = W3N$.

Une normalisation de ce genre est essentielle pour que le reste de l'interprétation soit correct.

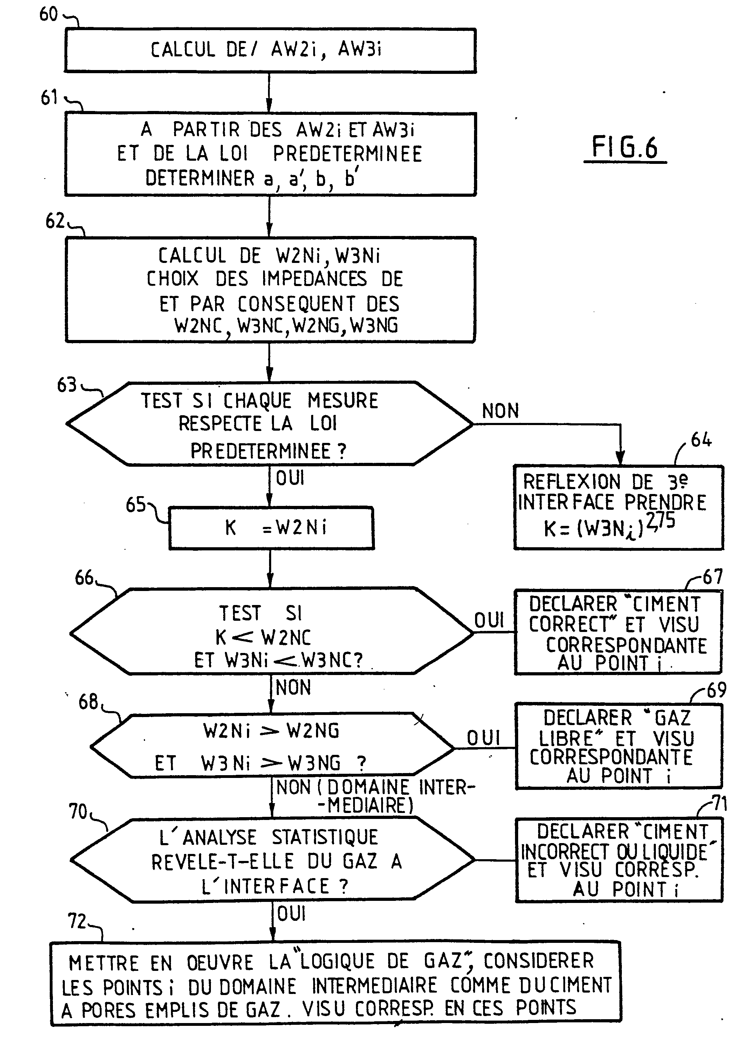

Il est maintenant fait référence à la figure 6. Son étape initiale 60 rappelle le calcul de AW2i et AW3i.

Ensuite, son étape 61 concerne les paramètres a, a', b, b' de normalisation, déterminés comme on vient de le décrire. Son étape 62 concerne la normalisation proprement dite, et le calcul des seuils.

Après cela, le test 63 détermine si, individuellement, chaque mesure respecte la loi prédéterminée. Si ce n'est pas le cas, l'étape 64 remplace W2Ni par $K = (W3Ni)^{2.75}$. Dans les autres cas on conserve W2Ni (étape 65), en le prenant comme valeur de K.

Le test 66 examine alors si K est inférieur à W2NC et si W3Ni est inférieur à W3NC. Si les deux conditions sont satisfaites, l'étape 67 considère qu'il s'agit de ciment correct et établit l'ordre de visualisation associé, pour le point considéré.

L'homme de l'art observera que, quoique différent du test précédemment décrit, le test 66 ne lui est pas contradictoire.

Si le test 66 donne une réponse non, le test 68 effectue les comparaisons précédemment décrites pour le gaz. S'il s'agit de gaz, l'étape 69 établit les ordres correspondants (gaz à l'interface, et visualisation correspondante).

Si la sortie du test 68 ne révèle pas de gaz, il s'agit du domaine intermédiaire et on passe à un autre test 70 d'analyse statistique, comme décrit plus haut. Ce test détermine si, sur une longueur donnée de tubage, on a trouvé une quantité significative de gaz à l'interface tubage/extérieur.

Si ce n'est pas le cas, l'étape 71 déclare « ciment incorrect ou liquide » et produit l'ordre de visualisation correspondant.

Dans la situation contraire, l'étape 72 déclenche la « logique de gaz », ce qui a pour effet que les points du domaine intermédiaire sont considérés comme du ciment à pores emplis de gaz, et un ordre de visualisation correspondant est établi.

Cette visualisation peut être par exemple faite sur une développée plane du tubage, repérée en angle et en profondeur, avec :
— du noir pour les points ou zones de ciment correct ;
— du blanc pour un ciment incorrect (ou du liquide) ;
— du gris clair pour du gaz libre à l'interface tubage/extérieur ; et
— un gris foncé pour un ciment à pores emplis de gaz.

A partir de là, on peut calculer à chaque profondeur le pourcentage de la circonférence du tubage correspondant à chaque cas, en ajoutant de préférence le ciment « gazeux » au ciment correct. Les trois courbes correspondantes, qui peuvent varier de 0 à 1, sont établies en faisant la moyenne mobile sur environ 1 m (intégration).

De plus, une analyse statistique, sur la circonférence du tubage, et intégrée sur une longueur donnée de celui-ci, permet aussi de déterminer la qualité des mesures et/ou de la normalisation :
— pour chaque profondeur, on calcule la médiane W2L des trois valeurs W2Ni les plus faibles, et la médiane W2H des 3 valeurs W2Ni les plus fortes. On détermine de même W3L et W3H avec les trois W3Ni les plus faibles et les plus forts, respectivement.
— On fait une moyenne ou intégration des 4 grandeurs W2L, W2H, W3L et W3H sur environ 1 m de tubage,
— les courbes W2L et W2H ainsi intégrées doivent respectivement recouvrir les courbes $(W3L)^{2.75}$ et $(W3H)^{2.75}$.

Ceci permet un contrôle de la qualité de la normalisation des données brutes. De plus, les courbes W2H et W3H devraient passer par 1 pour le tubage libre, ce qui permet de vérifier que l'on a bien choisi les valeurs adéquates pour les paramètres de normalisation.

Après ces vérifications, qui peuvent amener à recommencer le traitement dans certains cas (W2L nettement inférieur à $(W3L)^{2.75}$, notamment), on peut passer à des déterminations d'impédance acoustique :
— l'impédance acoustique est déterminée à partir de W2L et de l'épaisseur du tubage TH d'après la relation suivante :

$$Z = Zw - (0,30\,TH + 0,20)\,Log\,W2L$$

ou Log désigne la fonction Logarithme népérien,
— toutefois, si W2L est supérieur à $(W3L)^{2.75}$, plus une marge égale par exemple à 0,2, on détermine l'impédance d'après $(W3L)^{2.75}$ au lieu de W2L, qui est entachée de l'effet d'une réflexion de formations qui est à la fois intense et précoce.
— S'agissant de ciment, une résistance à la compression peut alors être calculée par l'une des formules suivantes :

$$CS = 1520\,Z - 3800 \text{ (ciment normal)}$$
ou
$$CS = 1000\,Z - 1500 \text{ (ciment mousse ou ciment léger)}.$$

On voit que l'invention offre à ce niveau des avantages essentiels :

8

— distinguer entre du ciment à pores de gaz, qui peut être satisfaisant et du ciment incorrect, ou du liquide ;

— estimer, sinon évaluer la perméabilité du ciment à pores de gaz (d'après la développée du tubage). Cela est très important, car un ciment mécaniquement satisfaisant, peut tenir le tubage de manière satisfaisante, mais le rendre inopérant s'il est perméable (« court-circuit » entre couches du sous-sol, et/ou avec la surface).

— Ne déterminer une résistance à la compression que lorsque l'on est raisonnablement sûr qu'il s'agit de ciment.

Un autre aspect très important de l'invention est que les mesures effectuées par l'outil CET comme décrit plus haut sont comparables à des mesures faites par un outil CBL. Et un avantage fort important est tiré de ce rapprochement.

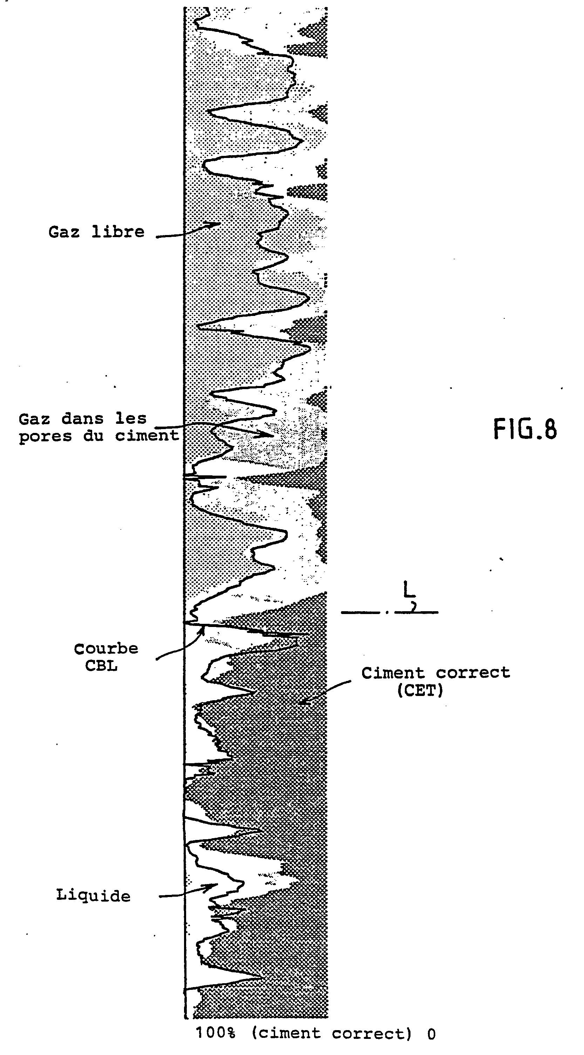

Un outil CBL est illustré sur la figure 7. Il comporte :

— un transducteur émetteur T,

— un transducteur récepteur R, et

— des moyens, MEC pour les maintenir espacés longitudinalement dans le tubage, ainsi que sensiblement centrés.

Un tel outil est décrit en détail dans le Brevet Etats-Unis n° 3 401 773.

Il est produit une mesure qui intéresse toute la circonférence du tubage et est intégrée sur environ 1 m, à partir de la vibration induite dans le tubage. Cette mesure est notée X. Pour la traiter, on définit deux constantes :

— FP qui représente la mesure de l'outil pour un tubage libre ;

— BP qui représente la mesure de l'outil pour un tubage tenu à 100 %.

Ces valeurs sont déterminées de manière connue de l'homme de l'art.

On passe aux logarithmes de ces grandeurs et de la mesure en cours X.

Et le pourcentage de la circonférence du tubage qui est bien tenu s'écrit :

$$\frac{\text{Log } X - \text{Log } FP}{\text{Log } BP - \text{Log } FP}$$

Il est apparu que, dans les conditions normales, notamment sans gaz à l'interface tubage/extérieur, la courbe obtenue par l'outil CBL correspond à la courbe de l'outil CET exprimée en pourcentage de circonférence, comme décrit plus haut. S'il en est autrement, la comparaison des deux courbes est riche d'enseignements pour l'homme de l'art.

De plus, il est alors possible de déclencher la « logique de gaz », si cela n'a pas encore été fait sur la base des seules mesures de l'outil CET.

On peut ainsi vérifier que l'on est en présence de ciment gazeux, car, dans ce cas, la courbe CBL doit correspondre sensiblement à la courbe CET qui fait la somme du ciment correct et du ciment gazeux, ou plus exactement au complément de la courbe gaz libre.

La figure 8 le montre sur un exemple particulier, portant sur des courbes de pourcentage circonférentiel, en moyenne mobile sur 1 m (3 pieds), et dans lequel :

— la zone blanche illustre le liquide ou ciment incorrect détecté par l'outil CET,

— la zone gris clair formée par une multitude de points isolés correspond au gaz libre détecté par l'outil CET,

— la zone gris clair uniforme correspond au gaz présent dans du ciment poreux, détecté par l'outil CET,

— la zone gris foncé hachurée correspond à du ciment correct, détecté par l'outil CET, et

— la ligne en trait épais illustre le résultat de la mesure CBL, tel que calculé plus haut.

L'échelle verticale est la profondeur. L'homme de l'art voit notamment que :

— le ciment est correct au-dessous de la ligne L,

— il a au contraire de fortes chances de ne pas jouer son rôle d'étanchéité hydraulique au-dessus de cette même ligne. Une appréciation définitive sera faite en fonction de l'histoire du puits, et des mesures CET en distribution circonférentielle.

Ainsi, la présente invention offre aussi l'avantage essentiel de permettre la compatibilité entre les mesures CBL et CET, et l'interprétation combinée de ces mesures.

Des interprétations combinées de ce genre ont été conduites sur un certain nombre de situations réelles. Elles ont permis de vérifier le bien-fondé du procédé selon l'invention, ainsi que l'excellente corrélation entre les courbes CET et CBL, maintenant rendues compatibles. Toute anomalie locale dans cette corrélation est révélatrice d'un phénomène utile. Les expérimentations l'ont confirmé pour les cas suivants :

— micro-espace-annulaire empli de liquide,

— mince gaine de ciment autour du tubage,

— corrosion du tubage ou dépôts internes,

— présence d'un gaz dans l'anneau,

— micro-espace-annulaire empli de gaz.

D'une manière très avantageuse, on peut combiner les outils CBL et CET de manière à enregistrer simultanément les deux mesures correspondantes.

## Revendications

1. Procédé pour évaluer la qualité du ciment entourant le tubage d'un puits, selon lequel :

— on déplace de façon repérée dans le tubage, une sonde porteuse d'un outil, muni de transducteurs émetteurs-récepteurs d'ultrasons visant des zones de directions angulaires différentes, et propres à induire dans le tubage une résonance d'épaisseur,

— on excite sélectivement les transducteurs et on enregistre sélectivement le signal reçu par chacun d'entre eux en réponse à son impulsion d'émission, ce signal contenant des informations sur la matière située à l'extérieur du tubage, dans la zone explorée par le transducteur, compte tenu de la position axiale et angulaire de la sonde dans le tubage, le traitement des signaux enregistrés comprenant, en combinaison, les opérations suivantes :

a) définir pour chaque signal reçu une première fenêtre (W1) calée sur le premier écho, dû à la réflexion sur la paroi interne du tubage, une seconde fenêtre (W2) calée sur la partie intermédiaire décroissante des échos suivants dus à l'environnement externe du tubage, et une troisième fenêtre (W3) calée sur la partie initiale de ces mêmes échos suivants :

b) déterminer pour chaque signal reçu deux grandeurs brutes (AW2i, AW3i) dont l'une (AW2i) représente le rapport entre les énergies des signaux reçus pendant les seconde et première fenêtres, et l'autre (AW3i) représente le rapport entre les énergies des signaux reçus pendant les troisième et première fenêtres ;

c) déterminer pour chaque signal reçu deux grandeurs normalisées (W2Ni, W3Ni) tirées respectivement des grandeurs brutes (AW2i, AW3i) par des combinaisons linéaires de la forme

$$W2Ni = a (AW2i - b)$$
$$W3Ni = a' (AW3i - b')$$

où a, a', b et b' sont des coefficients choisis en tenant compte de la réponse brute d'un tubage libre, en présence d'un environnement prédéterminé, tel que de l'eau à l'extérieur du tubage et de la boue à l'intérieur,

d) décider de la qualité de cimentation du tubage en fonction du fait que les couples de grandeurs normalisées (W2Ni, W3Ni) suivent une loi prédéterminée, et de la relation entre chaque grandeur normalisée (W2Ni, W3Ni) et un couple de valeurs de seuil qui lui est respectivement associé (W2NC, W3NC ; W2NG, W3NG).

2. Procédé selon la revendication 1, caractérisé en ce qu'à l'opération d/. on évalue la cimentation sur la base de la seconde grandeur normalisée (W3Ni) si la valeur de la première (W2Ni) est supérieure à ce que donne ladite loi prédéterminée.

3. Procédé selon l'une des revendications 1 et 2, caractérisé en ce qu'à l'opération d/., on décide que le tubage est entouré de solide et correctement cimenté dans la zone explorée par chaque transducteur si l'une au moins des grandeurs normalisées correspondantes (W2Ni, W3Ni) est en deçà du seuil inférieur qui lui est propre (W2NC, W3NC).

4. Procédé selon l'une des revendications 1 à 3, caractérisé en ce qu'à l'opération d/., on décide que le tubage est entouré de gaz dans la zone explorée par chaque transducteur si les deux grandeurs normalisées correspondantes (W2Ni, W3Ni) excèdent leurs seuils supérieurs respectifs (W2NG, W3NG).

5. Procédé selon l'une des revendications 1 à 4, caractérisé en ce que les seuils (W2NC, W3NC ; W2NG, W3NG) sont déterminés à partir d'une impédance de seuil caractéristique du ciment ou du gaz et des caractéristiques diamètre/épaisseur du tubage.

6. Procédé selon l'une des revendications 1 et 2, caractérisé en ce qu'à l'opération d/. on reconnaît une cimentation incorrecte ou une présence de liquide dans le domaine intermédiaire où les deux grandeurs normalisées (W2Ni, W3Ni) dépassent leurs seuils inférieurs respectifs (W2NC, W3NC) et où l'une au moins d'entre elles se trouve en deçà de son seuil supérieur (W2NG, W3NG).

7. Procédé selon la revendication 6, caractérisé en ce que, pour distinguer entre une cimentation incorrecte ou la présence de liquide et du ciment poreux, on effectue une analyse statistique des résultats pour les zones explorées selon les différentes directions angulaires et sur une longueur déterminée de tubage afin de déterminer si l'on est en présence de gaz, d'après le nombre de zones situées franchement dans le domaine gazeux, et en ce que, s'il apparaît ainsi que l'environnement est gazeux, on modifie les résultats relatifs aux zones présumées liquides ou au ciment incorrect pour les considérer comme du ciment poreux logeant du gaz.

8. Procédé selon l'une des revendications 6 et 7, dans lequel on descend en outre dans le tubage un outil du type CBL avec un émetteur et un récepteur ultrasonores espacés axialement, caractérisé en ce que :

e) l'on compare les résultats obtenus avec les deux outils pour déterminer que :

e1) l'on est en présence de ciment poreux si l'outil CBL révèle un tube tenu tandis que l'outil mentionné en premier lieu donne des résultats du domaine intermédiaire, et,

e2) l'on est en présence de liquide si les deux outils donnent des résultats concordants.

9. Procédé selon la revendication 8, caractérisé en ce qu'à l'étape e1), on analyse les résultats angulaires de l'outil mentionné en premier lieu en vue de déterminer si les porosités du ciment sont ou non communicantes.

10. Procédé selon l'une des revendications précédentes, caractérisé en ce qu'à l'étape b) on prend b = b' = 0.

11. Procédé selon l'une des revendications 1 à 9, caractérisé en ce qu'à l'étape b), on détermine b et b' d'après les points relatifs au meilleur ciment rencontré sur une longueur choisie du tubage.

12. Procédé selon l'une des revendications précédentes, caractérisé en ce que, les paramètres de normalisation a, a', b, b', sont déterminés pour que, sur une longueur choisie du tubage, les grandeurs normalisées suivent statistiquement une loi prédéterminée, sensiblement de la forme :

$$W2Ni = (W3Ni)^{2,75}$$

13. Procédé selon l'une des revendications précédentes, caractérisé en ce que les seuils inférieurs associés aux deux grandeurs normalisées sont déterminés pour distinguer un ciment minimum acceptable d'une boue lourde de densité environ 1,6 g cm$^{-3}$.

14. Procédé selon l'une des revendications précédentes, caractérisé en ce que les seuils supérieurs associés aux deux grandeurs normalisées sont déterminés pour distinguer un gaz sous pression, d'impédance acoustique voisine de 0,1 kg/mm$^2$/s.

15. Procédé selon l'une des revendications précédentes, caractérisé par l'opération supplémentaire suivante établir une représentation figurative illustrant, angulairement et le long du tubage, la présence de ciment correct, de ciment gazeux, de liquide ou de gaz libre.

16. Procédé selon la revendication 8, caractérisé en ce que, pour la comparaison prévue à l'étape e), on établit à partir des mesures de l'outil mentionné en premier lieu, des informations de pourcentage circonférentiel, établies en moyenne mobile sur une longueur du tubage qui correspond à celle explorée par l'outil CBL, et relatives au gaz libre, au liquide, au ciment correct et au ciment à pores emplis de gaz.

**Claims**

1. A method for evaluating the quality of cement surrounding the casing of a well, wherein :
— a sonde is moved in a referenced manner in the casing, the sonde carrying a tool provided with ultrasonic emitter-receiver transducers aiming at zones in different angular directions, and suitable for inducing thickness resonance in the casing ; and
— the transducers are selectively excited and recording are selectively made of the signal received from each of them in response to this emission pulse, said signal containing data on the material located outside the casing in the zone scanned by the transducer, taking account of the axial and angular position of the sonde in the casing, the processing of the recorded signals comprising in combination the following operations :

a) defining for each received signal a first window (W1) set on the first echo caused by the reflection on the inside wall of the casing, a second window (W2) set on the decreasing intermediate portion of the following echoes caused by the environment outside the casing, and a third window (W3) set on the initial portion of said following echoes ;

b) determining for each received signal two absolute magnitudes (AW2i, AW3i), in which one of the magnitudes (AW2i) represents the ratio between the signal energies received in the second and the first windows, and the other magnitude (AW3i) represents the ratio between the signal energies received during the third and the first windows ;

c) determining two normalized magnitudes (W2Ni, W3ni) for each received signal and respectively deduced from the absolute magnitudes (AW2i, AW3i) by linear combinations of the form :

$$W2Ni = a\,(AW2i - b)$$
$$W3Ni = a'\,(AW3i - b')$$

where a, a', b and b' are coefficients chosen to take account of the absolute response of free casing in the presence of a predetermined environment, such as water outside the casing and mud inside the casing ; and

d) deciding on the quality of the cementing round the casing as a function of the fact that the pairs of normalized magnitudes (W2Ni, W3Ni) obey a predetermined law, and as a function of the relationship between each normalized magnitude (W2Ni, W3Ni) and a pair of threshold values respectively associated therewith (W2NC, W3NC ; W2NG, W3NG).

2. A method according to claim 1, characterized in that at operation d), the cementing is evaluated on the basis of the second normalized magnitude (W3Ni) if the value of the first normalized magnitude (W2Ni) is greater than that given by the said predetermined law.

3. A method according to claim 1 or 2, characterized in that at operation d), it is decided that the casing is surrounded by solid and correctly cemented in the zone scanned by each transducer if at least one of the corresponding normalized magnitudes (W2Ni, W3Ni) is less than the lower threshold relative thereto (W2NC, W3NC).

4. A methode according to claim 1, 2 or 3, characterized in that at operation d), it is decided that the casing is surrounded by gas in the zone scanned by each transducer if the two corresponding normalized magnitudes (W2Ni, W3Ni) exceed their corresponding upper thresholds (W2NG, W3NG).

5. A method according to any one of claims 1 to 4, characterized in that the thresholds (W2NC, W3NC ; W2NG, W3NG) are determined from a threshold impedance characteristic of the cement or of gas and from the diameter/thickness characteristics of the casing.

6. A method according to claim 1 or 2, characterized in that at operation d) it is recognized that the cementing is incorrect or that a liquid is present in the intermediate domain where the two normalized magnitudes (W2Ni, W3Ni) exceed their respective lower thresholds (W2NC, W3NC) and where at least one of them is below its corresponding upper threshold (W2NG, W3NG).

7. A method according to claim 6, characterized in that to distinguish between incorrect cementing or the presence of liquid and porous cement a statistical analysis is performed of the results for the zones scanned in different angular directions and over a determined length of the casing in order to determine whether gas is present from the number of zones which are clearly situated in the gas domain, and in that if it thus appears that the environment is gassy, the results relating to the presumed liquid zones or to the zones of presumed incorrect cementing are modified to be considered as being zones of porous cement housing gas.

8. A method according to claim 6 or 7, in which a CBL type tool having an ultrasonic emitter and receiver which are axially spaced is additionally lowered in the casing, characterized in that :

e) the results obtained by the two tools are compared to determine that :

e1) porous cement is present if the CBL tool indicates that the tube is held while the first-mentioned tool gives results in the intermediate domain ; and

e2) liquid is present if both tools give concordant results.

9. A method according to claim 8, characterized in that at step e1) the angular results of the first-mentioned tool are analyzed to determine whether the porosities of the cement are in communication or not.

10. A method according to any preceding claim characterized in that at step b), onz takes $b = b' = 0$.

11. A method according to any one of claims 1 to 9, characterized in that step b), b and b' are determined from points representative of the best cement encountered on a chosen length of casing.

12. A method according to any preceding claim, characterized in that the normalization parameters a, a', b, b' are determined so that on a given length of casing the normalized magnitudes statistically follow a predetermined law having substantially the form :

$$W2Ni = (W3Ni)^{2.75}$$

13. A method according to any preceding claim, characterized in that the lower thresholds associated with the two normalized values are determined to distinguish a minimum acceptable cement from a heavy mud of density about 1.6 g/cm$^3$.

14. A method according to any preceding claim, characterized in that the upper thresholds associated with the two normalized values are determined to distinguish a gas under pressure, having an acoustic impedance of about 0.1 kg/mm$^2$/s.

15. A method according to any preceding claim, characterized by the following additional operation establishing a diagram illustrating the presence of correct cement, gassy cement, liquid or free gas around and along the casing.

16. A method according to claim 8, characterized in that for the comparison at step e) circumferential percentage data are established from the measurements of the first mentioned tool on the basis of a moving average along a length of casing which corresponds to the length scanned by the CBL tool, and relating to free gas, to liquid, to correct cement, and to cement having pores filled with gas.

## Patentansprüche

1. Verfahren zum Abschätzen der Qualität von eine Bohrlochverrohrung umgebendem Zement, bei dem :

— man in der Verrohrung schrittweise eine ein Gerät tragende Sonde verlagert, versehen mit Ultraschall-Sender-Empfänger-Umsetzern, die auf in Winkelrichtung unterschiedliche Zonen gerichtet sind und ausgebildet sind zum Induzieren einer dicken Resonanz in der Verrohrung,

— man selektiv die Umsetzer erregt und selektiv das Signal aufzeichnet, das von jedem derselben im Ansprechen auf seinen Sendeimpuls empfangen wird, welches Signal Informationen bezüglich des Materials im Inneren der Verrohrung enthält, in der von dem Umsetzer untersuchten Zone, unter Berücksichtigung der Axial- und Winkellage der Sonde in der Verrohrung, wobei die Verarbeitung der aufgezeichneten Signale im Kombination die folgenden Schritte umfaßt :

a) Definieren für jedes empfangene Signal, eines ersten Fensters (W1) für das erste Echo, zurückzuführen auf die Reflektion an der Verrohrungsinnenwandung, eines zweiten Fensters (W2) für den abfallenden Zwischenabschnitt der folgenden Echos, herrührend von der äußeren Umgebung der Verrohrung, und eines dritten Fensters (W3) für den Anfangsabschnitt dieser selben folgenden Echos ;

b) Bestimmen, für jedes empfangene Signal, von zwei Rohgrößen (AW2i, AW3i), deren eine (AW2i) das Verhältnis zwischen den Energien der empfangenen Signale während des zweiten und des ersten Fensters repräsentiert und das andere (AW3i) das Verhältnis zwischen den Energien der empfangenen Signale während des dritten und des ersten Fensters repräsentiert ;

c) Bestimmen, für jedes empfangene Signal, von zwei normalisierten Größen (W2Ni, W3Ni), abgeleitet jeweils von den Rohgrößen (AW2i, AW3i) durch lineare Kombinationen der Form

$$W2Ni = a \, (AW2i-b)$$
$$W3Ni = a' \, (AW3i-b')$$

worin a, a', b und b' Koeffizienten sind, ausgewählt unter Berücksichtigung des Rohansprechens eines freien Rohres in Gegenwart einer vorbestimmten Umgebung, wie Wasser, außerhalb der Verrohrung und Bohrspülung im Inneren.

d) Entscheiden bezüglich der Qualität der Verrohrungszementierung in Funktion der Tatsache, daß die Paare normalisierter Größen (W2Ni, W3Ni) einem vorbestimmten Gesetz folgen und der Beziehung zwischen jeder normalisierten Größe (W2Ni, W3Ni) und einem Paar von Schwellenwerten, die ihr jeweils zugeordnet ist (W2NC, W3NC ; W2NG, W3NG).

2. Verfahren nach Anspruch 1, dadurch gekennzeichnet, daß man bei Schritt d) die Zementierung auf der Basis der zweiten normalisierten Größe (W3Ni) abschätzt, falls der Wert der ersten (W2Ni) größer ist als die, welche aus dem genannten vorbestimmten Gesetzt folgt.

3. Verfahren nach einem der Ansprüche 1 und 2, dadurch gekennzeichnet, daß man bei Schritt d) entscheidet, daß die Verrohrung von Feststoff umgeben und in der von jedem Umsetzer untersuchten Zone korrekt zementiert ist, wenn mindestens eine der entsprechendfen normalisierten Größen (W2Ni, W3Ni) unterhalb der Schwelle liegt, die ihr zugeordnet ist (W2NC, W3NC)

4. Verfahren nach einem der Ansprüche 1 bis 3, dadurch gekennzeichnet, daß man bei Schritt d) entscheidet, daß die Verrohrung von Gas in der von jedem Umsetzer untersuchten Zone umschlossen ist, wenn die beiden entsprechenden normalisierten Größen (W2Ni, W3Ni) ihre jeweiligen oberen Schwellen (W2NG, W3NG) überschreiten.

5. Verfahren nach einem der Ansprüche 1 bis 4, dadurch gekennzeichnet, daß die Schwellen (W2NC, W3NC ; W2NG, W3NG) bestimmt werden, ausgehend von einer charakteristischen Schwellenimpedanz des Zements oder des Gases und von Durchmesser/Dicke-Charakteristiken der Verrohrung.

6. Verfahren nach einem der Ansprüche 1 und 2, dadurch gekennzeichnet, daß man bei Schritt d) eine unkorrekte Zementierung oder ein Vorhandensein von Flüssigkeit in dem Zwischenbereich erkennt, wo die beiden normalisierten Größen (W2Ni, W3Ni) ihre jeweiligen unteren Schwellen (W2NC, W3NC) übersteigen und wo mindestens eine von ihnen sich unterhalb ihres oberen Schwellenwertes (W2NG, W3NG) befindet.

7. Verfahren nach Anspruch 6, dadurch gekennzeichnet, daß man zur Unterscheidung zwischen einer unkorrekten Zementierung oder dem Vorhandensein von Flüssigkeit und porösem Zement eine statistische Analyse der Resultate für die untersuchten Zonen gemäß den unterschiedlichen Winkelrichtungen und auf einer bestimmten Länge der Verrohrung ausführt, um festzustellen, ob Gas vorhanden ist entsprechend der Anzahl von Zonen, die sich frei in dem Gas-Bereich befinden und dadurch, daß man, falls so ermittelt wird, daß es sich um gasförmiges Umgebungsmaterial handelt, die Resultate bezüglich jener Zonen modifiziert, die als flüssig oder unkorrekt zementiert angenommen waren, um sie als porösen gashaltigen Zement zu betrachten.

8. Verfahren nach einem der Ansprüche 6 und 7, bei dem man ferner in die Verrohrung ein Gerät des Typs CBL absenkt mit einem Ultraschallsender und Empfänger, die in Axialrichtung beabstandet sind, dadurch gekennzeichnet, daß

e) man die mit den beiden Geräten erzielten Resultate miteinander vergleicht, um zu bestimmen, daß

e1) das CBL-Gerät ein gehaltenes Rohr feststellt, während das an erster Stelle genante Gerät Resultate des Zwischenbereichs liefert und daß

e2) Flüssigkeit vorliegt, falls die beiden Geräten konkordante Resultate fiefern.

9. Verfahren nach Anspruch 8, dadurch gekennzeichnet, daß man bei Schritt e1) die Winkelresultate des ersterwähnten Gerätes analysiert, um festzustellen, ob die Poren des Zements kommunizierend sind oder nicht.

10. Verfahren nach einem der vorangehenden Ansprüche, dadurch gekennzeichnet, daß man bei Schritt b- den Schritt b = b' = 0 wählt.

11. Verfahren nach einem der Ansprüche 1 bis 9, dadurch gekennzeichnet, daß man bei Schritt b) die Werte b und b' bestimmt gemäß den Punkten, die dem besten auf einer gewählten Länge der Verrohrung angetroffenen Zement zugeordnet sind.

12. Verfahren nach einem der vorangehenden Ansprüche, dadurch gekennzeichnet, daß die Normalisierungsparameter a, a', b, b' derart bestimmt werden, daß die normalisierten Größen auf einer gewählten Länge der Verrohrung statistisch einem vorbestimmten Gesetz folgen, das im wesentlichen die Form hat :

$$W2Ni = (W3Ni)^{2.75}$$

13. Verfahren nach einem der vorangehenden Ansprüche, dadurch gekennzeichnet, daß die den beiden normalisierten Größen zugeordneten unteren Schwellen bestimmt werden zum Unterscheiden eines minimal akzeptablen Zements für eine schwere Bohrspülung der Dichte von etwa 1,6 g cm$^{-3}$.

14. Verfahren nach einem der vorangehenden Ansprüche, dadurch gekennzeichnet, daß die den beiden normalisierten Größen zugeordneten oberen Schwellen bestimmt werden zum Unterscheiden eines unter Druck stehenden Gases mit einer akustischen Impedanz nahe 0,1 kg/mm$^2$/s.

15. Verfahren nach einem der vorangehenden Ansprüche, gekennzeichnet durch den folgenden zusätzlichen Schritt Etablieren einer figurativen illustrierenden Darstellung in Winkelrichtung und Längsrichtung der Verrohrung des Vorhandenseins von korrektem Zement, gashaltigen Zement, Flüssigkeit oder freiem Gas.

16. Verfahren nach Anspruch 8, dadurch gekennzeichnet, daß man für den gemäß Schritt e) vorgesehenen Vergleich, ausgehend von Messungen des erstgenannten Geräts, Informationen bezüglich des Prozentsatzes in Umfangsrichtung etabliert, mit einem laufenden Durchschnitt auf einer Länge der Verrohrung, die derjenigen entspricht, die durch das CBL-Gerät untersucht wurde, und bezüglich freien Gases, Flüssigkeit, korrektem Zement und Zement mit Gas gefüllten Pören.

FIG.1

T1
T2 — 23
T3
T4
T5
T6
T7
T8
T9

20
22
21
10

FIG.7

MEC

EP 0 176 400 B1

FIG. 2

EXCITATION DU TRANSDUCTEUR

to

DT

W1

W3

W2

FENETRES W1 W3 W2

FIG.3A

TUBAGE LIBRE (NON ENTOURE DE SOLIDE)
W2 ELEVE    W3 ELEVE

FIG.3B

TUBAGE BIEN TENU

W2 BAS    W3 BAS

FIG.3C

REFLEXIONS DUES A DES FORMATIONS SOUTERRAINES
W2 ELEVE    W3 BAS

X1 ←→ X10
ECHELLE VERTICALE

2

## FIG. 4

FIG. 5

FIG. 5A

EP 0 176 400 B1

EP 0 176 400 B1

FIG. 5B

## FIG.6

**60** — CALCUL DE/ AW2i, AW3i

**61** — A PARTIR DES AW2i ET AW3i ET DE LA LOI PREDETERMINEE DETERMINER $a$, $a'$, $b$, $b'$

**62** — CALCUL DE W2Ni, W3Ni CHOIX DES IMPEDANCES DE ET PAR CONSEQUENT DES W2NC, W3NC, W2NG, W3NG

**63** — TEST SI CHAQUE MESURE RESPECTE LA LOI PREDETERMINEE ?

NON → **64** — REFLEXION DE 3e INTERFACE PRENDRE $K = (W3N_i)^{2,75}$

OUI

**65** — $K = W2Ni$

**66** — TEST SI $K < W2NC$ ET $W3Ni < W3NC$ ?

OUI → **67** — DECLARER "CIMENT CORRECT" ET VISU CORRESPONDANTE AU POINT i

NON

**68** — $W2Ni > W2NG$ ET $W3Ni > W3NG$ ?

OUI → **69** — DECLARER "GAZ LIBRE" ET VISU CORRESPONDANTE AU POINT i

NON (DOMAINE INTER-MEDIAIRE)

**70** — L'ANALYSE STATISTIQUE REVELE-T-ELLE DU GAZ A L'INTERFACE ?

→ **71** — DECLARER "CIMENT INCORRECT OU LIQUIDE" ET VISU CORRESP. AU POINT i

OUI

**72** — METTRE EN OEUVRE LA "LOGIQUE DE GAZ", CONSIDERER LES POINTS i DU DOMAINE INTERMEDIAIRE COMME DU CIMENT A PORES EMPLIS DE GAZ. VISU CORRESP. EN CES POINTS

7

EP 0 176 400 B1

FIG.8

100% (ciment correct) 0

8